# EUROPEAN PATENT APPLICATION

(11) **EP 4 016 051 A1**
(43) Date of publication of application: **22.06.2022**
(21) Application number: 21212649.4
(22) Date of filing: 17.08.2011
(51) Int. Cl.: G01N 21/27, G01N 21/64, G01N 21/03, G01N 21/77

(54) **TOOL AND METHOD FOR VALIDATING OPERATIONAL PERFORMANCE OF A PHOTOLUMINESCENCE BASED ANALYTICAL INSTRUMENT**

(62) Divisional of application: 11760716.8
(71) Applicant: Agilent Technologies, Inc., Santa Clara, CA 95051 (US)
(72) Inventor: Papkovsky, Dmitri Boris, Co. Cork (IE); Hynes, James Niall, Co. Cork (IE)
(74) Representative: Purdylucey Intellectual Property

(57) **Abstract**

A reference vessel and a method of validating operational integrity of an analytical instrument using the reference vessel. The reference vessel has certain design features that render it particularly suited for interrogation by a specific analytical instrument, and is equipped with a surrogate probe that generates a perceptible signal of known value when interrogated by that instrument regardless of the actual value of the variable in communication with the surrogate probe.

## Description

### BACKGROUND

Photoluminescent sensors or probes are a widely employed method of measuring analyte concentration, typically oxygen, within an enclosed space such as a package or container. See, for example United States Published Patent Applications 2009/0029402, 2008/8242870, 2008/215254, 2008/199360, 2008/190172, 2008/148817, 2008/146460, 2008/117418, 2008/0051646, and 2006/0002822, and United States Patents 7,569,395, 7,534,615, 7,368,153, 7,138,270, 6,689,438, 5,718,842, 4,810,655, and 4,476,870.

Briefly, analyte concentration within a package or container can be measured by placing an analyte sensitive photoluminescent probe within the package or container, allowing the probe to equilibrate within the package or container, exciting the probe with radiant energy, and measuring the extent to which radiant energy emitted by the excited probe is quenched by the presence of the target analyte. Such optical sensors are available from a number of suppliers, including Presence Precision Sensing, GmbH of Regensburg, Germany, Oxysense of Dallas, Texas, United States, and Luxcel Biosciences, Ltd of Cork, Ireland.

Such probes can be used to quantify a rate of oxygen uptake by biological and chemical samples, thereby serving as a biomarker of cell or organism viability. Also, many oxygen-dependent enzymatic and chemical reactions can be monitored via oxygen consumption, providing a means for evaluating the performance of various reactants, catalysts, enzymes, etc. and the effect of various conditions (e.g., temperature, pressure, concentrations, etc.).

The placement of photoluminescent probes into vials for monitoring oxygen consumption by a sample placed into the vial is known. United States Patent Nos. 5,371,016 and 6,080,574 describe optical systems for measuring sample sterility and microbial growth by monitoring oxygen consumption by a sample placed within a vial having a fluorescence-based oxygen sensor built into the vial. WO98/15645 describes an optical system that uses a solid-state luminescence-based oxygen sensor to assess a biological sample containing living micro-organisms by measuring gradients of dissolved oxygen within the sample. United States Patent No. 5,882,922 describes a system for measuring oxygen consumption in samples using wells containing a solid-state oxygen sensor coating applied to the bottom of each well or soluble oxygen probes added to each sample.

The technique is well suited for use in establishing whether the microbial count in a product, such as a processed food, meets health and safety standards established for such products. When employed for such purposes, the system typically reports each sample as PASS / FAIL based upon whether the sample is found to have a microbial count above or below an established threshold value, with the vast majority of samples reported as PASS.

Unfortunately, such systems are susceptible to masked malfunctions (i.e., a gross malfunction - as opposed to a minor error in accuracy such as a drift in calibration - in an analytical instrument that causes the instrument to generate false data or provide false reports which are not readily noticed during normal use and operation of the instrument) as a system suffering from a gross malfunction is likely to report samples as PASS even though the system is not effectively measuring microbial count. When a masked malfunction is discovered it can require the destruction and/or recall of product manufactured over a substantial period of time as there is no way to ascertain when the masked malfunction occurred.

Accordingly, a substantial need exists for quick, simple and inexpensive tool and method for validating operational performance of photoluminescence based analytical instruments.

### SUMMARY OF THE INVENTION

A first aspect of the invention is a tool. The tool is specially adapted for use in combination with working vessels having a certain design feature and equipped with a working probe sensitive to a given variable of a sample placed within the working vessel so as to be capable of generating a perceptible signal reflective of the value of such sensed variable when interrogated by an instrument specifically adapted to interrogate a working probe on a working vessel.

A first embodiment of the first aspect of the invention comprises a reference vessel having the certain design feature and equipped with a surrogate probe effective for consistently generating a perceptible signal of known value when interrogated by the instrument regardless of the actual value of the variable in communication with the surrogate probe.

The first embodiment of the first aspect of the invention is preferably adapted for use in connection with an instrument that is effective for classifying a sample within a working vessel as a positive sample or a negative sample based upon a threshold value of the perceptible signal generated by the working probe on the working vessel containing the sample, and the known value of the perceptible signal generated by the surrogate probe on the reference vessel when interrogated by the instrument is effective for causing the reference vessel to be classified as a positive sample when interrogated by the instrument.

A second embodiment of the first aspect of the invention comprises a reference vessel having the certain design feature and equipped with a surrogate probe effective for consistently generating a perceptible signal indicative of a positive sample in communication with a working probe when interrogated by the instrument regardless of the actual value of the variable in communication with the surrogate probe.

A second aspect of the invention is also a tool. The tool is useful for detecting changes in a variable characteristic of samples so as to permit classification of each sample as a positive sample or a negative sample. The second aspect of the invention, includes at least (i) a plurality of working vessels, each equipped with a working probe sensitive to a given variable of a sample placed into the vessel and capable of generating a perceptible signal reflective of the value of such given variable, and (ii) at least one reference vessel equipped with a surrogate probe effective for consistently generating a perceptible signal indicative of a positive sample in communication with a working probe regardless of the actual value of the variable in communication with the probe.

A third aspect of the invention is a method for validating operational integrity of an analytical instrument. A first embodiment of the third aspect includes the steps of (i) identifying an analytical instrument specifically adapted to interrogate photoluminescent working probes on vessels having a particular design feature , (ii) obtaining a tool in accordance with the first embodiment of the first aspect of the invention wherein the certain design feature is the particular design feature, (iii) interrogating the surrogate probe on the reference vessel with the identified analytical instrument to generate a perceptible signal having a reference value, and, (iv) comparing the reference value with the known value.

A second embodiment of the third aspect includes the steps of (i) identifying an analytical instrument specifically adapted to interrogate photoluminescent working probes on vessels having a particular design feature, (ii) obtaining a tool in accordance with the second embodiment of the first aspect of the invention wherein the certain design feature is the particular design feature and the value of the perceptible signal generated by interrogation of the surrogate probe is known, (iii) interrogating the surrogate probe on the reference vessel with the identified analytical instrument to generate a perceptible signal having a reference value, and (iv) comparing the reference value with the known value.

A fourth aspect of the invention is also a method for validating operational integrity of an analytical instrument. The method includes the steps of (i) identifying an analytical instrument specifically adapted to interrogate photoluminescent working probes on vessels having a particular design feature, (ii) obtaining a tool in accordance with the second aspect of the invention wherein the certain design feature is the particular design feature and the value of the perceptible signal generated by interrogation of the surrogate probe is known, (iii) placing aliquots from one or more samples into a plurality of the working vessels to form filled working vessels, (iv) periodically interrogating the working probes on the filled working vessels with the identified analytical instrument throughout a testing period, (v) recording data obtained from interrogation of the filled working probes, (vi) interrogating the surrogate probe on the reference vessel at least once during the testing period with the identified analytical instrument to generate a perceptible signal having a reference value, (vii) comparing the reference value with the known value, and (viii) designating the recorded data as invalid when the reference value deviates from the known value by a threshold value.

A fifth aspect of the invention is a method for assessing any change in the value of a perceptible signal generated by a photoluminescent working probe sensitive to a given variable, caused by an attribute of a sample placed into operable communication with the probe other than the given variable. The fifth aspect of the invention includes the steps of (i) obtaining a tool in accordance with the first embodiment of the first aspect of the invention, (ii) interrogating the surrogate probe on the reference vessel *sans* sample to generate a perceptible signal having a reference value, (iii) placing an aliquot from a sample into the reference vessel to form a filled reference vessel, (iv) interrogating the surrogate probe on the filled reference vessel to generate a perceptible signal having an affected value, and (v) determining deviation between reference value and affected value.

The determined deviation can be employed to calibrate the analytical instrument used to interrogate the surrogate probe in order to compensate for the determined deviation.

The following are numbered statements of invention:
1. A tool for use in combination with working vessels having a certain design feature, wherein the working vessels are equipped with a working probe sensitive to a given variable of a sample placed within the vessel so as to be capable of generating a perceptible signal reflective of the value of such sensed variable when interrogated by an instrument specifically adapted to interrogate working probes on vessels having the certain design feature, the tool comprising a reference vessel having the certain design feature and equipped with a surrogate probe effective for consistently generating a perceptible signal of known value when interrogated by the instrument regardless of the actual value of the variable in communication with the surrogate probe.
2. The tool of clause 1 wherein (i) the instrument is effective for classifying a sample within a working vessel as a positive sample or a negative sample based upon a threshold value of the perceptible signal generated by the working probe on the working vessel containing the sample, and (ii) the known value is effective for causing the reference vessel to be classified as a positive sample when interrogated by the instrument.
3. A tool for use in combination with working vessels having a certain design feature, wherein the working vessels are equipped with a working probe sensitive to a given variable of a sample placed into the vessel so as to be capable of generating a perceptible signal reflective of the value of such sensed variable when interrogated by an instrument specifically adapted to interrogate working probes on vessels having the certain design feature, the tool comprising a reference vessel having the certain design feature and equipped with a surrogate probe effective for consistently generating a perceptible signal indicative of a positive sample in communication with a working probe when interrogated by the instrument regardless of the actual value of the variable in communication with the surrogate probe.
4. A tool for use in detecting changes in a variable characteristic of samples so as to permit classification of each sample as a positive sample or a negative sample, the tool comprising:
   a. a plurality of working vessels, each equipped with a working probe sensitive to a given variable of a sample placed into the vessel and capable of generating a perceptible signal reflective of the value of such given variable, and
   b. at least one reference vessel equipped with a surrogate probe effective for consistently generating a perceptible signal indicative of a positive sample in communication with a working probe regardless of the actual value of the variable in communication with the probe.
5. The tool of any of clauses 1 through 4 wherein the reference vessel is a vial, cuvette or multiwell plate.
6. The tool of any of clauses 1 through 3 wherein the certain design feature includes at least configuration.
7. The tool of any of clauses 1 through 3 wherein the certain design feature includes at least exterior contour.
8. The tool of any of clauses 1 through 3 wherein the certain design feature includes at least location of the working probe on the working vessels.
9. The tool of any of clauses 1 through 3 wherein the certain design feature includes at least size.
10. The tool of any of clauses 1 through 4 wherein the surrogate probe comprises a solid state composition comprising a target-analyte-sensitive photoluminescent dye embedded within a carrier matrix that is impermeable to target-analyte.
11. The tool of clause 4 wherein (i) the working probes comprise a first solid state composition comprising a target-analyte-sensitive photoluminescent dye embedded within a target-analyte-permeable carrier matrix, wherein the first composition has a first sensitivity to target-analyte, and (ii) the surrogate probe comprises a second solid state composition comprising a target-analyte-sensitive photoluminescent dye embedded within a carrier matrix that is different from the carrier matrix in the first composition, wherein the second composition has a second sensitivity to target-analyte that is different than the first sensitivity to target-analyte.
12. The tool of clause 11 wherein the working probes and the surrogate probe contain the same target-analyte-sensitive photoluminescent dye.
13. The tool of clause 10 wherein the target-analyte is oxygen.
14. The tool of clause 13 wherein the photoluminescent dye is an oxygen sensitive transition metal complex.
15. The tool of clause 14 wherein the oxygen sensitive transition metal complex is selected from the group consisting of a ruthenium bipyridyl, a ruthenium diphenylphenanotroline, a platinum porphyrin, a palladium porphyrin, a phosphorescent complex of a tetrabenzoporphyrin, a chlorin, a porphyrin-ketone, an aza-porphyrin and a long-decay luminescent complex of iridium(III) or osmium(II).
16. The tool of clause 13 wherein the carrier matrix in the surrogate probe is an oxygen impermeable carrier matrix.
17. The tool of clause 16 wherein the carrier matrix in the surrogate probe is selected from the group consisting of polyvinyl chloride, polymethylmethacrylate, a polyvinylidine chloride - polyvinyl chloride copolymer, a polyvinylidene chloride-acrylonitrile copolymer, and polyethylene vinyl alcohol.
18. The tool of any of clauses 1 through 4 wherein the given variable is composition.
19. The tool of any of clauses 1 through 4 wherein the given variable is partial pressure of a target-analyte.
20. The tool of clause 19 wherein the target-analyte is oxygen or carbon dioxide.
21. The tool of any of clauses 1 through 4 wherein the given variable is H⁺.
22. The tool of clause 4 wherein the working vessels and the surrogate vessel, *sans* probe, are identical.
23. The tool of clause 4 wherein the carrier matrix in the working probes is highly oxygen permeable.
24. The tool of clause 4 wherein the carrier matrix in the working probes is selected from the group consisting of silicone, polystryrene, polycarbonate, and polysulfone.
25. The tool of clause 4 wherein the tool includes at least 10 working vessels.
26. The tool of clause 4 wherein the tool includes at least 40 working vessels.
27. The tool of clause 4 wherein the tool includes at least 100 working vessels.
28. A method for validating operational integrity of an analytical instrument, comprising the steps of:
   a. identifying an analytical instrument specifically adapted to interrogate photoluminescent working probes on vessels having a particular design feature,
   b. obtaining a tool in accordance with clause 1 wherein the certain design feature is the particular design feature,
   c. interrogating the surrogate probe on the reference vessel with the identified analytical instrument to generate a perceptible signal having a reference value, and
   d. comparing the reference value with the known value.
29. A method for validating operational integrity of an analytical instrument, comprising the steps of:
   a. identifying an analytical instrument specifically adapted to interrogate photoluminescent working probes on vessels having a particular design feature,
   b. obtaining a tool in accordance with clause 3 wherein the certain design feature is the particular design feature and the value of the perceptible signal generated by interrogation of the surrogate probe is known,
   c. interrogating the surrogate probe on the reference vessel with the identified analytical instrument to generate a perceptible signal having a reference value, and
   d. comparing the reference value with the known value.
30. A method for validating operational integrity of an analytical instrument, comprising the steps of:
   a. identifying an analytical instrument specifically adapted to interrogate photoluminescent working probes on vessels having a particular design feature,
   b. obtaining a tool in accordance with clause 4 wherein the certain design feature is the particular design feature and the value of the perceptible signal generated by interrogation of the surrogate probe is known,
   c. placing aliquots from one or more samples into a plurality of the working vessels to form filled working vessels,
   d. periodically interrogating the working probes on the filled working vessels with the identified analytical instrument throughout a testing period,
   e. recording data obtained from interrogation of the filled working probes,
   f. interrogating the surrogate probe on the reference vessel at least once during the testing period with the identified analytical instrument to generate a perceptible signal having a reference value,
   g. comparing the reference value with the known value, and
   h. designating the recorded data as invalid when the reference value deviates from the known value by a threshold value.
31. A method for assessing any change in the value of a perceptible signal generated by a photoluminescent working probe sensitive to a given variable, caused by an attribute of a sample placed into operable communication with the probe other than the given variable, comprising the steps of:
   a. obtaining a tool in accordance with clause 1,
   b. interrogating the surrogate probe on the reference vessel *sans* sample to generate a perceptible signal having a reference value,
   c. placing an aliquot from a sample into the reference vessel to form a filled reference vessel,
   d. interrogating the surrogate probe on the filled reference vessel to generate a perceptible signal having an affected value, and
   e. determining deviation between reference value and affected value.
32. The method of clause 31 further comprising the step of calibrating the analytical instrument used to interrogate the surrogate probe to compensate for the determined deviation.
33. The method of any of clauses 28, 29 and 31 wherein the certain design feature includes at least configuration.
34. The method of any of clauses 28, 29 and 31 wherein the certain design feature includes at least exterior contour.
35. The method of any of clauses 28, 29 and 31 wherein the certain design feature includes at least location of the working probe on the working vessels.
36. The method of any of clauses 28, 29 and 31 wherein the certain design feature includes at least size.
37. The method of any of clauses 28 through 31 wherein the surrogate probe comprises a solid state composition comprising a target-analyte-sensitive photoluminescent dye embedded within a carrier matrix that is impermeable to target-analyte.
38. The method of clause 30 wherein (i) the working probes comprise a first solid state composition comprising a target-analyte-sensitive photoluminescent dye embedded within a target-analyte-permeable carrier matrix, wherein the first composition has a first sensitivity to target-analyte, and (ii) the surrogate probe comprises a second solid state composition comprising a target-analyte-sensitive photoluminescent dye that is the same as the dye in the first composition, embedded within a carrier matrix that is different from the carrier matrix in the first composition, wherein the second composition has a second sensitivity to target-analyte that is different than the first sensitivity to target-analyte.
39. The method of clause 37 wherein the target-analyte is oxygen.
40. The method of clause 37 wherein the photoluminescent dye is an oxygen sensitive transition metal complex.
41. The method of clause 40 wherein the oxygen sensitive transition metal complex is selected from the group consisting of a ruthenium bipyridyl, a ruthenium diphenylphenanotroline, a platinum porphyrin, a palladium porphyrin, a phosphorescent complex of a tetrabenzoporphyrin, a chlorin, a porphyrin-ketone, an aza-porphyrin and a long-decay luminescent complex of iridium(III) or osmium(II).
42. The method of clause 37 wherein the carrier matrix in the surrogate probe is an oxygen impermeable carrier matrix.
43. The method of clause 42 wherein the carrier matrix in the surrogate probe is selected from the group consisting of polyvinyl chloride, polymethylmethacrylate, a polyvinylidine chloride - polyvinyl chloride copolymer, a polyvinylidene chloride-acrylonitrile copolymer, and polyethylene vinyl alcohol.
44. The method of any of clauses 28 through 31 wherein the given variable is composition.
45. The method of any of clauses 28 through 31 wherein the given variable is partial pressure of a target-analyte.
46. The method of clause 45 wherein the target-analyte is oxygen, carbon monoxide or carbon dioxide.
47. The method of clause 30 wherein the filled working vessels are incubated during the time period the working probe on the filled working vessels are interrogated, whereby microorganisms growing in the sample in the filled working vessels can effect a variation in composition by the metabolic consumption or generation of a component.
48. The method of any of clauses 28 through 31 wherein the given variable is H⁺.
49. The method of clause 30 wherein the working vessels and the surrogate vessel, *sans* probe, are identical.
50. The method of clause 30 wherein the carrier matrix in the working probes is highly oxygen permeable.
51. The method of clause 30 wherein the carrier matrix in the working probes is selected from the group consisting of silicone, polystryrene, polycarbonate, and polysulfone.
52. The method of clause 30 wherein samples are placed into at least 10 working vessels.
53. The method of clause 30 wherein samples are placed into at least 40 working vessels.
54. The method of clause 30 wherein samples are placed into at least 100 working vessels.
55. The method of any of clauses 28 through 31 wherein the method is effective for detecting a masked malfunction.

### BRIEF DESCRIPTION OF THE DRAWINGS

Figure 1 is a side view of one embodiment of a reference vessel in accordance with this invention.
Figure 1A is a grossly enlarged cross-sectional side view of the surrogate probe depicted in Figure 1.
Figure 2 is a side view of one embodiment of a several working vessels in accordance with this invention, each containing a sample.
Figure 2A is a grossly enlarged cross-sectional side view of the working probe depicted in Figure 2.

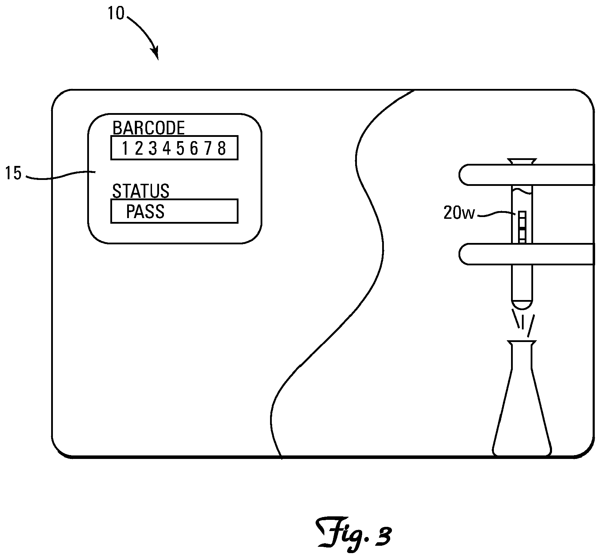

Figure 3 is a depiction of one of the working vessels depicted in Figure 2 being interrogated by an analytical instrument adapted to interrogate the working probe on the working vessel.

### DETAILED DESCRIPTION OF A PREFERRED EMBODIMENT

### Nomenclature

- 10: Interrogation Device
- 15: Display Component of Interrogation Device
- 20r: Reference Vessel
- 20w: Working Vessel
- 21r: Open Top End of Reference Vessel
- 21w: Open Top End of Working Vessel
- 22r: Closed Bottom End of Reference Vessel
- **22w**: Closed Bottom End of Working Vessel
- **29r**: Retention Chamber of Reference Vessel
- **29w**: Retention Chamber of Working Vessel
- **30r**: Surrogate Probe on Reference Vessel
- **30w**: Working Probe on Working Vessel
- **31r**: Oxygen-Sensitive Photoluminescent Dye Component of Surrogate Probe
- **31w**: Oxygen-Sensitive Photoluminescent Dye Component of Working Probe
- **32r**: Carrier Matrix Component of Surrogate Probe
- **32w**: Carrier Matrix Component of Working Probe
- **40**: Barcode
- **50**: Sample

### Definitions

As used herein, including the claims, the phrase ***"positive sample"*** means a sample that, when in operable communication with a probe/sensor sensitive to a given variable and within any appropriate test period during which pertinent changes in the given variable should occur in the sample, causes the probe to generate a perceptible signal indicating that the value of the given variable possessed or exhibited by the sample is beyond a detectable threshold value. For example, a sample in communication with an oxygen sensitive photoluminescent probe in which viable aerobic bacteria within the sample has consumed sufficient oxygen to reduce the dissolved oxygen concentration in the sample below a threshold value of 10% O₂ within twelve hours - detected by measuring changes in the probe's optical signal - is a positive sample.

As used herein, including the claims, the phrase **"*negative sample*"** means a sample that, when in operable communication with a probe sensitive to a given variable and after any appropriate test period during which pertinent changes in the given variable should occur in the sample, does not cause the probe to generate a perceptible signal indicating that the value of the given variable possessed or exhibited by the sample is beyond a detectable threshold value. For example, (i) a sample in communication with an oxygen sensitive photoluminescent probe in which viable aerobic bacteria within the sample have not consumed sufficient oxygen to reduce the dissolved oxygen concentration in the sample below 10% O₂ from the initial concentration within an appropriate test period of twelve hours - detected by measuring changes in the probe's optical signal - when the threshold value is at 10% O₂ from the initial concentration, is a negative sample, and (ii) a sample in communication with an oxygen sensitive photoluminescent probe in which viable aerobic bacteria within the sample required sixteen hours to consume sufficient oxygen to reduce the oxygen concentration in the sample to a threshold value of a 10% reduction from the initial concentration - detected by measuring changes in the probe's optical signal - when the appropriate test period is twelve hours, is a negative sample.

As used herein, including the claims, the phrase **"*oxygen permeable*"** means a material that when formed into a 1 mil (25.4 µm) film has an oxygen transmission rate of greater than 1,000 cm³/m² day when measured in accordance with ASTM D 3985.

As used herein, including the claims, the phrase **"*highly oxygen permeable*"** means a material that when formed into a 1 mil (25.4 µm) film has an oxygen transmission rate of greater than 2,000 cm³/m² day when measured in accordance with ASTM D 3985.

As used herein, including the claims, the phrase **"*oxygen impermeable*"** means a material that when formed into a 1 mil (25.4 µm) film has an oxygen transmission rate of less than 100 cm³/m² day when measured in accordance with ASTM F 1927.

As used herein, including the claims, the phrase **"*oxygen barrier*"** means a layer of material or laminated layers of materials that has an oxygen transmission rate of less than 200 cm³/m² day when measured in accordance with ASTM F 1927.

As used herein, including the claims, the phrase **"*masked malfunction*",** when used to describe a condition of an analytical instrument, means a gross malfunction - as opposed to a minor error in accuracy such as a drift in calibration - in an analytical instrument that causes the instrument to generate false data or provide false reports which are not readily noticed during normal use and operation of the instrument. For example, complete failure of a sensor in an analytical instrument that causes the instrument to report all samples as NEGATIVE or ACCEPTABLE (e.g., containing less than a threshold concentration of a target-analyte) regardless of actual conditions, when all samples are normally and routinely reported as NEGATIVE or ACCEPTABLE, is a "masked malfunction".

### Construction

A first aspect of the invention is a tool useful for validating operational integrity of an analytical instrument **10** designed to interrogate photoluminescent working probes **30w** on working vessels **20w** having a particular design feature. The particular design feature may be selected from any design feature or characteristic including specifically, but not exclusively size, shape, exterior contour, configuration, location of working probe **30w** on the working vessel **20w,** etc.

The working probe **30w** can be any device capable of sensing and reporting changes in a given variable, such as changes in a target-analyte concentration (e.g., H⁺, CO, CO₂ or O₂), within an enclosed volume. In a preferred embodiment, the working probe **30w** is an optically-active, target-analyte sensitive material configured and arranged to experience changes in target-analyte concentration or partial pressure P_{A} in a sample **50** placed within the retention chamber **29w** of a working vessel **20w.** The analyte-sensitive material is preferably a photoluminescent dye embedded within an analyte permeable polymer matrix. Since the preferred type of working probe **30w** is an optically-active, target-analyte sensitive material, and the most frequent target-analyte of interest is oxygen, the balance of the disclosure shall be based upon a photoluminescent oxygen quenched working probe **30w** without intending to be limited thereby.

Analytical instruments **10** for interrogating probes based on the quenching of photoluminescence by an analyte are well known and commercially available from various sources, including bioMérieux SA of France and Mocon, Inc. of Minneapolis, Minnesota.

The radiation emitted by an excited probe can be measured in terms of intensity and/or lifetime (rate of decay, phase shift or anisotropy), with measurement of lifetime generally preferred as a more accurate and reliable measurement technique.

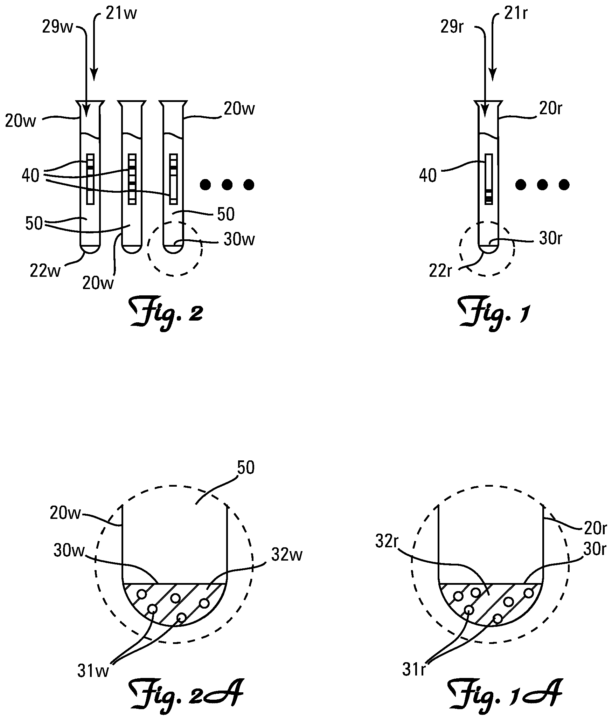

Referring to Figures 1 and 1A, the tool is a reference vessel **20r** having the particular design feature and equipped with a surrogate probe **30r.** Providing the reference vessel **20r** with the particular design feature allows the reference vessel **20r** to be interrogated by the analytical instrument **10** without requiring special handling or manipulation of the reference vessel **20r** or irregular operation of the analytical instrument **10.**

The surrogate probe **30r** is effective for consistently generating a perceptible signal of known value when interrogated by the instrument **10** regardless of the actual value of the variable (e.g., oxygen concentration) in communication with the surrogate probe **30r.** That known value is preferably one that is effective for causing the reference vessel **20r** to be classified as a positive sample when interrogated by the instrument **10.**

In a preferred embodiment, the surrogate probe **30r** comprises an oxygen-sensitive photoluminescent dye **31r** that is the same as the oxygen-sensitive photoluminescent dye **31w** employed in working probes **30w** interrogated by the analytical instrument **10,** but contrary to the working probes **30w** that embed the oxygen-sensitive photoluminescent dye **31w** within a working carrier matrix **32w** that render the working probe **30w** sensitive to oxygen concentration, the surrogate probe **30r** embeds the oxygen-sensitive photoluminescent dye **31r** within a surrogate carrier matrix **32r** that renders the surrogate probe **30r** less sensitive to oxygen concentration. Most preferably the surrogate carrier matrix **32r** is an oxygen impermeable material effective for causing the analytical instrument **10** to reliably recognize and report the surrogate vessel **20r** as a vessel containing a positive sample **50** regardless of the actual concentration of oxygen in the retention chamber **29r** of the reference vessel **20r.**

The reference vessel **20r** is preferably selected from the same stock used for the working vessels **20w.** Exemplary vessels suitable for use as the working vessels **20w** - and thereby the reference vessel **20r,** include vials, cuvettes, multi-well plates (*e.g.*, 6, 12, 24, 48, 96 and 384 well plates), and the like formed from materials such as a plastic (*e.g.*, polypropylene or polyethylene terphthalate) or glass.

When the surrogate probe **30r** is based on the quenching of photoluminescence by an analyte, the reference vessel **20r,** or at least that portion of the reference vessel **20r** coated with the surrogate probe **30r,** must allow radiation at the excitation and emission wavelengths to be transmitted to and received from the surrogate probe **30r** with minimal interference. The surrogate probe **30r** is preferably positioned within the retention chamber **29r** proximate the bottom end **22r** of the reference vessel **20r.**

The oxygen-sensitive photoluminescent dye **31r** and **31w** rmay be selected from any of the well-known oxygen sensitive photoluminescent dyes used in the construction of oxygen sensitive photoluminescent probes (not shown). A nonexhaustive list of such oxygen sensitive photoluminescent dyes **50** includes specifically, but not exclusively, ruthenium(II)-bipyridyl and ruthenium(II)-diphenylphenanothroline complexes, porphyrin-ketones such as platinum(II)-octaethylporphine-ketone, platinum(II)-porphyrin such as platinum(II)-tetrakis(pentafluorophenyl)porphine, palladium(II)-porphyrin such as palladium(II)-tetrakis(pentafluorophenyl)porphine, phosphorescent metallocomplexes of tetrabenzoporphyrins, chlorins, azaporphyrins, and long-decay luminescent complexes of iridium(III) or osmium(II).

The surrogate carrier matrix **32r** is selected to be less permeable to oxygen than the working carrier matrix **32w,** and is preferably an oxygen-impermeable composition that renders the surrogate probe **30r** at least 10 times less sensitive to oxygen than working probes **30w,** more preferably at least 50 times less sensitive to oxygen than the working probes **30w,** and most preferably at least 100 times less sensitive to oxygen than the working probes **30w.**

The surrogate probe **30r** preferably generates a photoluminescence intensity signal that will be unfailingly recognized by the analytical instrument and reported as a positive sample. One of routine skill in the art is capable of selecting a suitable surrogate carrier matrix **32r.** A nonexhaustive list of suitable polymers for use as the oxygen-impermeable surrogate carrier matrix **62** includes specifically, but not exclusively, polyvinylidine chloride copolymers such as polyvinylidine chloride - polyvinyl chloride and polyvinylidene chloride-acrylonitrile, polyvinyl chloride, polyvinyl alcohol, polyethylene vinyl alcohol and polymethylmethacrylate.

As is well known to those of routine skill in the art, suitable working carrier matrix 32w include polymers such as silicone, polystryrene, polycarbonate, polysulfone, etc.

The reference vessel **20r** is preferably imprinted with both computer readable (*e.g.*, barcode) and human perceptible indicia **40** that identifies the vessel as a reference vessel **20r** - thereby allowing the microcontroller for the analytical instrument **10** and/or the human operator to recognize the "positive" reading obtained from the surrogate vessel **20r** as the result of a validation test, and also recognize the lack of a "positive" reading obtained from the surrogate vessel **20r** as indicative of a system failure or malfunction requiring further investigation and possible remedial action.

A reference vessel **20r** can be sold individually, as a consumable component of each analytical instrument **10,** and/or as a consumable component of each set or group of working vessels **20w** (*e.g.*, a reference vessel **20r** provide with each set of 40, 80, 100 or more working vessels **20w** ordered) obtained for use with a given analytical instrument.

### Manufacture

The reference vessel **20r** can be conveniently manufactured by the same basic processes employed to manufacture working vessels **20w** except that the working carrier matrix **32w** is replaced with a surrogate carrier matrix **32r.** Briefly, the process includes the steps of (A) preparing a coating cocktail (not shown) which contains the surrogate oxygen-sensitive photoluminescent dye **31r,** such as Pt-octaethylporphine-ketone, and the surrogate oxygen-impermeable carrier matrix **32r,** such as polyvinylidene chloride - acrylonitrile copolymer, in an organic solvent (not shown) such as acetone, (B) depositing a small amount of the cocktail (not shown) into the bottom **22r** of the retention chamber **29r** of a vessel having the appropriate design feature, (C) and allowing the cocktail (not shown) to dry.

Generally, the concentration of the surrogate carrier matrix **32r** in the organic solvent (not shown) should be in the range of 0.1 to 20% w/w, with the ratio of dye **31r** to surrogate carrier matrix **32r** in the range of 1:50 to 1:5,000 w/w.

### Use

The reference vessel **20r** can be used to quickly and easily validate operational integrity of an analytical instrument **10.**

In a first embodiment, the surrogate probe **30r** on a reference vessel **20r** is interrogating with the analytical instrument **10** to generate a perceptible signal having a reference value, and the reference value is compared with the known value. If the reference value deviates from the known value by more than a predetermined threshold value, a perceptible signal is generated indicating detection of a system error or malfunction-typically a masked malfunction - that requires further investigation and potential remedial action.

In a second embodiment, the method includes the steps of (i) forming filled working vessels by placing aliquots from one or more samples **50** into a plurality of the working vessels **20w,** (ii) periodically interrogating the working probes **30w** on the filled working vessels **20w** with the analytical instrument **10** throughout a testing period, (iii) recording data obtained from such interrogations, (iv) interrogating the surrogate probe **30r** on the reference vessel **20r** at least once during the testing period with the analytical instrument **10** to generate a perceptible signal having a reference value, (v) comparing the reference value with the known value, and (vi) designating the recorded data as invalid when the reference value deviates from the known value by a threshold value.

The reference vessel **20r** can also be used to quickly and easily assessing any change in the value of a perceptible signal generated by a working probe **30w** sensitive to a given variable, caused by an attribute of a sample **50** placed into operable communication with the working probe **30w** other than the given variable. The method includes the steps of (i) interrogating a surrogate probe **30r** on a reference vessel **20r** *sans* sample **50** to generate a perceptible signal having a reference value, (ii) placing a sample **50** into the reference vessel **20r** to form a filled reference vessel **20r,** (iii) interrogating the surrogate probe **30r** on the filled reference vessel **20r** to generate a perceptible signal having an affected value, and (iv) determining deviation between reference value and affected value. The determined deviation can be employed to calibrate the analytical instrument **10** used to interrogate the surrogate probe **30r** in order to compensate for the determined deviation.

## Claims

1. A tool comprising a reference vessel, said reference vessel having a certain design feature and equipped with a surrogate probe effective for consistently generating a perceptible signal of known value of a variable when interrogated by an instrument regardless of the actual value of the variable in communication with the surrogate probe.

2. The tool of Claim 1, wherein said tool is for use in combination with working vessels, said working vessels having a certain design feature and equipped with a working probe sensitive to a variable of a sample placed within the working vessel so as to be capable of generating a perceptible signal reflective of the value of such sensed variable when interrogated by an instrument specifically adapted to interrogate a working probe on a working vessel.

3. The tool of Claim 1 or 2, wherein the known value is effective for causing the reference vessel to be classified as a positive sample when interrogated by the instrument.

4. The tool of any one of the preceding claims, which is a multiwell plate.

5. The tool of any one of the preceding claims, wherein the certain design feature is selected from size, shape, exterior contour, configuration and location.

6. The tool of any one of the preceding claims wherein the working probe comprises an optically active material sensitive to a target analyte and wherein the surrogate probe has reduced sensitivity to said given target analyte compared with said working probe.

7. The tool of Claim 6, wherein the target analyte is selected from oxygen, carbon dioxide, carbon monoxide and pH.

8. A method for validating the operational integrity of an analytical instrument, comprising the steps of
a) identifying an analytical instrument specifically adapted to interrogate photoluminescent working probes on vessels having a particular design feature,
b) obtaining a tool in accordance with any one of the preceding claims,
c) interrogating the surrogate probe on the reference vessel with the identified analytical instrument to generate a perceptible signal having a reference value, and,
d) comparing the reference value with the known value.

9. A method for assessing any change in the value of a perceptible signal generated by a photoluminescent working probe sensitive to a given variable, caused by an attribute of a sample placed into operable communication with the probe other than the given variable, comprising the steps of:
a) obtaining a tool in accordance with any one of the preceding claims,
b) interrogating the surrogate probe on the reference vessel *sans* sample to generate a perceptible signal having a reference value,
c) placing an aliquot from a sample into the reference vessel to form a filled reference vessel,
d) interrogating the surrogate probe on the filled reference vessel to generate a perceptible signal having an affected value, and
e) determining deviation between reference value and affected value.

10. A tool for detecting changes in a variable characteristic of samples so as to permit classification of each sample as positive sample or a negative sample, said tool comprising a plurality of working vessels, each quipped each equipped with a working probe sensitive to a given variable of a sample placed into the vessel and capable of generating a perceptible signal reflective of the value of such given variable, and (ii) at least one reference vessel equipped with a surrogate probe effective for consistently generating a perceptible signal indicative of a positive sample in communication with a working probe regardless of the actual value of the variable in communication with the probe.

11. A method for validating operational integrity of an analytical instrument, said method comprising the steps of :
a) identifying an analytical instrument specifically adapted to interrogate photoluminescent working probes on vessels having a particular design feature,
b) obtaining a tool in accordance with Claim 10, wherein the certain design feature is the particular design feature and the value of the perceptible signal generated by interrogation of the surrogate probe is known,
c) placing aliquots from one or more samples into a plurality of the working vessels to form filled working vessels,
d) periodically interrogating the working probes on the filled working vessels with the identified analytical instrument throughout a testing period,
e) recording data obtained from interrogation of the filled working probes,
f) interrogating the surrogate probe on the reference vessel at least once during the testing period with the identified analytical instrument to generate a perceptible signal having a reference value,
g) comparing the reference value with the known value, and
h) designating the recorded data as invalid when the reference value deviates from the known value by a threshold value.
